(19) **Europäisches Patentamt**
**European Patent Office**
**Office européen des brevets**

(11) **EP 3 749 432 B1**

(12) **EUROPÄISCHE PATENTSCHRIFT**

(45) Veröffentlichungstag und Bekanntmachung des Hinweises auf die Patenterteilung:
**02.03.2022 Patentblatt 2022/09**

(21) Anmeldenummer: **19700882.4**

(22) Anmeldetag: **14.01.2019**

(51) Internationale Patentklassifikation (IPC):
**B01D 39/16** *(2006.01)*

(52) Gemeinsame Patentklassifikation (CPC):
**B01D 39/1623;** B01D 2239/0233; B01D 2239/025;
B01D 2239/0622; B01D 2239/0627;
B01D 2239/065; B01D 2239/0686;
B01D 2239/1233; B01D 2239/125; B01D 2239/1258

(86) Internationale Anmeldenummer:
**PCT/EP2019/050773**

(87) Internationale Veröffentlichungsnummer:
**WO 2019/154591 (15.08.2019 Gazette 2019/33)**

(54) **FILTERMEDIUM MIT EINER VLIESLAGE UND EINER MELTBLOWNLAGE**

FILTER MEDIUM HAVING A NONWOVEN LAYER AND A MELT-BLOWN LAYER

MATÉRIAU FILTRANT DOTÉ D'UNE COUCHE DE NON-TISSÉ ET D'UNE COUCHE OBTENUE PAR FUSION-SOUFFLAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.02.2018 DE 102018102822**

(43) Veröffentlichungstag der Anmeldung:
**16.12.2020 Patentblatt 2020/51**

(73) Patentinhaber: **Neenah Gessner GmbH**
**83052 Bruckmühl (DE)**

(72) Erfinder:
• **DEMMEL, Andreas**
**83620 Feldkirchen-Westerham (DE)**
• **GEISBERGER, Georg**
**83043 Bad Aibling (DE)**

(74) Vertreter: **Flach Bauer Stahl**
**Patentanwälte Partnerschaft mbB**
**Adlzreiterstraße 11**
**83022 Rosenheim (DE)**

(56) Entgegenhaltungen:
WO-A1-2008/078858 WO-A1-2010/049052
DE-A1- 4 443 158

**Beschreibung**

Die vorliegende Erfindung betrifft ein Filtermedium, das eine Vlieslage mit Bikomponentenfasern und eine Meltblownlage umfasst, und ein Filterelement mit einem derartigen Filtermedium.

Stand der Technik

Die Standzeit oder auch Lebensdauer eines Filterelementes ist die Zeit, die vom Zeitpunkt der erstmaligen Benutzung des Filterelements bis zum Erreichen eines vorgegebenen maximalen Differenzdrucks vergeht. Je größer die Filtrationsfläche des Filterelementes und je besser die Staubspeicherfähigkeit des Filtermediums (Filtermaterials) auf Grund seiner Oberflächenbeschaffenheit ist, desto länger ist die Standzeit.

Die Druckdifferenz gibt den Druckunterschied an, der beim Anströmen des Filtermaterials mit dem zu filtrierendem Fluid vor und hinter dem Filtermaterial herrscht.

Je geringer die Druckdifferenz ist, desto höher ist der Fluiddurchsatz bei vorgegebener Pumpleistung. Die Druckdifferenz ist bei einem vorgegebenen Filtermaterial und bei einem vorgegebenen Volumenstrom des zu filtrierenden Fluids umso geringer, je größer die Filtrationsfläche eines Filterelementes ist.

Um eine möglichst große Filtrationsfläche zu erreichen, werden die meisten Filtermaterialien gefaltet. Die Faltenanzahl ist durch die Größe und Geometrie des Filterelements jedoch begrenzt.

Damit das gefaltete Filtermaterial auch hohen mechanischen Belastungen standhält, muss das Filtermaterial möglichst steif sein. Um die gewünschte Steifigkeit zu erreichen, ist es oft notwendig, eine dickere Lage zu verwenden. Die größere Dicke des Filtermaterials hat jedoch den Nachteil, dass weniger Falten ausgebildet werden können, so dass die zur Verfügung stehende Filterfläche verkleinert wird. Dies beeinflusst wiederum die Staubspeicherfähigkeit des Filterelements negativ und führt zu einem größeren Druckverlust.

Der Erfindung liegt daher die Aufgabe zugrunde, ein Filtermedium mit sehr guter Standzeit, Effizienz, Speicherfähigkeit und Steifigkeit zu schaffen, und das darüber hinaus die Möglichkeit bietet, beim Falten eine größere Filterfläche zu erreichen. Weiterhin soll das Filtermaterial bei der Verwendung bei hohen Temperaturen eine möglichst geringe Versprödung aufweisen.

Dokumente WO2010049052 A1 und WO2008078858 A1 offenbaren ein Filtermedium umfassend eine Vlieslage, die Bikomponentenfasern aufweist, und eine Meltblownlage.

Zusammenfassung der Erfindung

Die Aufgabe wird erfindungsgemäß durch ein Filtermaterial mit den Merkmalen des Anspruchs 1 und ein Filterelement mit den Merkmalen des Anspruchs 15 gelöst. Vorteilhafte Ausführungsformen der Erfindung sind in den weiteren Ansprüchen beschrieben.

Detaillierte Beschreibung der Erfindung

Das erfindungsgemäße Filtermedium umfasst eine Vlieslage, bevorzugt eine Spinnvlieslage, die Bikomponentenfasern aufweist, und eine Meltblownlage, die Polyesterfasern mit einem mittleren Durchmesser kleiner als 1,8 μm umfasst. Die Dicke der Vlieslage ist kleiner als 0,4 mm bei 0,1 bar Auflagedruck. Mindestens 25% der Polyesterfasern der Meltblownlage haben einen Durchmesser kleiner als 1 μm.

Erstaunlicherweise hat sich herausgestellt, dass durch die erfindungsgemäße Kombination der Bikomponentenfasern enthaltenden Vlieslage und der Meltblownlage eine sehr gute Standzeit, Effizienz und Steifigkeit erreicht wird. Außerdem kann eine größere Filterfläche beim Falten erreicht werden. Ferner weist das Filtermaterial bei der Verwendung bei hohen Temperaturen und Temperaturschwankungen, zum Beispiel unter Motorhauben von Kraftfahrzeugen oder in Gasturbinen, nur eine geringe Versprödung auf.

Das erfindungsgemäße Filtermedium zeigt keine wesentlichen physikalischen Veränderungen und keinen Effizienzabfall, wenn es einer Temperatur bis zu 160 °C ausgesetzt wird.

Die Effizienz und der Druckverlust des Filtermediums der vorliegenden Erfindung bleiben konstant oder zumindest im Wesentlichen konstant, auch wenn das Filtermedium für 15 Minuten einer Temperatur von 140 °C und bevorzugt von 160 °C ausgesetzt wird. Der Druckverlust des Filtermediums erhöht sich nicht mehr als 10% und bevorzugt nicht mehr als 5%, nachdem das Filtermedium für 15 min einer Temperatur von 140 °C ausgesetzt wird. Der Druckverlust des Filtermediums erhöht sich nicht mehr als 10% und bevorzugt nicht mehr als 5%, nachdem das Filtermedium für 15 min einer Temperatur von 160 °C ausgesetzt wird. Die Messungen wurden wie unten beschrieben durchgeführt.

Die Staubspeicherkapazität des Filtermediums der vorliegenden Erfindung bleibt konstant oder zumindest im Wesentlichen konstant, auch wenn das Filtermedium für 15 Minuten einer Temperatur von 140 °C und bevorzugt von 160 °C ausgesetzt wird. Die Staubspeicherkapazität des Filtermediums verringert sich nicht mehr als 20% und bevorzugt nicht mehr als 10%, nachdem das Filtermedium für 15 min einer Temperatur von 140 °C ausgesetzt wird. Der Druckverlust des Filtermediums verringert sich nicht mehr als 20% und bevorzugt nicht mehr als 10%, nachdem das Filtermedium für 15 min einer Temperatur von 160 °C ausgesetzt wird. Die Messungen wurden wie unten beschrieben durchgeführt.

Das erfindungsgemäße Filtermedium weist eine Effizienz von 35% (F7 Klasse), 50% (F8 Klasse) bzw. 70% (F9 Klasse) auf. Die angegebene Effizienz entspricht der Minimal-Effizienz in Prozent bei 0,4 $\mu$m DEHS Partikeln nach der Norm DIN EN779:2012 (wie unten beschrieben).

Das Filtermedium der vorliegenden Erfindung hat eine Flächenmasse von vorzugsweise 69 g/m$^2$ - 180 g/m$^2$, bevorzugt von 80 g/m2 bis 150 g/m2 und besonders bevorzugt von 90 bis 130 g/m2.

Bevorzugt beträgt die Luftdurchlässigkeit des Filtermediums 140 - 400 1/m$^2$s, und besonders bevorzugt 150-250 l/m$^2$s.

Bevorzugt beträgt die Dicke des Filtermediums bei 0,1 bar Auflagedruck 0,32 bis 0,82 mm, besonders bevorzugt 0,50 bis 0,70 mm. Die Porosität des Filtermediums der vorliegenden Erfindung liegt vorzugsweise bei 70% bis 90% und besonders bevorzugt bei 80% bis 90%.

Die Vlieslage, die bevorzugt eine Spinnvlieslage ist, hat vorzugsweise eine Dicke von weniger als 0,40 mm nach DIN EN ISO 534 bei 0,1 bar Auflagedruck. Besonders bevorzugt beträgt die Dicke der Vlieslage 0,25 bis 0,38 mm und insbesondere 0,30-0,35 mm.

Die Flächenmasse der Vlieslage beträgt 60 g/m$^2$ - 120 g/m$^2$, bevorzugt von 75 g/m2 bis 90 g/m2, und besonders bevorzugt 80 g/m2.

Die Luftdurchlässigkeit der Vlieslage beträgt 1000 - 3500 l/m$^2$s, bevorzugt von 1800-2800 l/m$^2$s.

Zur Herstellung der Vlieslage kann jede bekannte Methode benutzt werden. Bevorzugt besteht die Vlieslage aus einem Spinnvlies oder kardiertem Vlies. Das Vlies kann chemisch und/oder thermisch verfestigt sein. Besonders bevorzugt ist die Vlieslage eine Spinnvlieslage.

Die Vlieslage umfasst oder besteht aus Bikomponentenfasern. Bikomponentenfasern bestehen aus einem thermoplastischen Material mit mindestens einem Faseranteil mit einem höheren Schmelzpunkt und einem zweiten Faseranteil mit einem niedrigeren Schmelzpunkt. Die physikalische Konfiguration dieser Fasern ist dem Fachmann bekannt und besteht typischerweise aus einer Seite-an-Seite- oder Mantel-Kern-Struktur.

Die Bikomponentenfasern können aus einer Vielzahl von thermoplastischen Materialien hergestellt werden, einschließlich Polyolefinen (wie z.B. Polyethylenen und Polypropylenen), Polyestern (wie Polyethylenterephthalat (PET), Polybutylenterephthalat (PBT) und PCT), Polyamiden einschließlich Nylon 6, Nylon 6,6, Nylon 6,12 usw. Bevorzugt werden die Bikomponentenfasern aus Polyestern hergestellt. Besonders bevorzugt bestehen die Bikomponentenfasern aus PET/coPET.

Die Bikomponentenfasern haben vorzugsweise einen mittleren Durchmesser von 10 bis 35 $\mu$m, besonders bevorzugt von 14 bis 30 $\mu$m.

Die erfindungsgemäße Meltblownlage umfasst Polyesterfasern mit einem mittleren Durchmesser (d1) von kleiner als 1,8 $\mu$m, bevorzugt von 0,6 $\mu$m$\leq$ d1 <1,8 $\mu$m, und besonders bevorzugt von 0,60 $\mu$m $\leq$d1 $\leq$ 1,75 $\mu$m, wobei mindestens 25% und bevorzugt 50% der Polyesterfasern der Meltblownlage einen Durchmesser (d) von kleiner als 1 $\mu$m, bevorzugt 0,6$\leq$d<1 $\mu$m, und besonders bevorzugt 0,60$\leq$d$\leq$0,95 $\mu$m haben. Bevorzugt mindestens 25%, und besonders bevorzugt mindestens 40% der Polyesterfaser in der Meltblownlage haben einen Durchmesser 0,60$\leq$d$\leq$0,90 $\mu$m. Der Anteil von Polyesterfasern mit einem Durchmesser 0,6$\leq$d$\leq$0,85 $\mu$m ist mindestens 25% und bevorzugt mindestens 30%.

In der vorliegenden Erfindung wird zwischen dem "mittleren Durchmesser" und dem "Durchmesser" unterschieden. Dieser Unterschied ist deswegen von Bedeutung, da der mittlere Durchmesser keine Information über die Menge an feinen Fasern mit einem bestimmten Durchmesser angibt. Die Meltblownlage der vorliegenden Erfindung hat vorzugsweise eine Flächenmasse von 9 g/m$^2$ - 35 g/m$^2$, besonders bevorzugt von 12 g/m2 bis 30 g/m2, und insbesondere 18 g/m2 bis 24 g/m2. Bevorzugt hat die Meltblownlage eine Luftdurchlässigkeit von 100 - 800 l/m$^2$s, besonders bevorzugt von 180-400 l/m$^2$s, insbesondere von 180 bis 300 l/m$^2$s. Die Dicke der Meltblownlage beträgt vorzugsweise 0,07 bis 0,22 mm, besonders bevorzugt 0,10 bis 0,16 mm.

Zur Herstellung des erfindungsgemäßen Meltblownvlieses wird der in der Fachwelt bekannte Meltblownprozess verwendet. Geeignete Polymere (insbesondere Polyester) sind zum Beispiel Polyethylentherephtalat oder Polybutylentherephtalat. Bevorzugt umfasst die Meltblownlage Polybutylentherephtalat-Fasern. Besonders bevorzugt besteht die Meltblownlage aus Polybutylentherephtalat-Fasern. Den Polymeren können je nach Anforderungen noch Additive, wie zum Beispiel Hydrophilierungsmittel, Hydrophobierungsmittel, Kristallisationsbeschleuniger oder Farben, zugemischt werden. Je nach Anforderung kann die Oberfläche der Meltblownvliese durch Oberflächenbehandlungsverfahren, wie zum Beispiel Coronabehandlung oder Plasmabehandlung, in ihrer Eigenschaft verändert werden. Das Filtermedium kann entweder nur aus der Kombination von Vlieslage und Meltblownlage bestehen oder noch eine oder mehrere andere Lagen umfassen.

Das Filtermedium kann außer der Vlies- und Meltblownlage zusätzlich eine Schutzlage umfassen, welche die Meltblownlage schützt. Die Schutzlage kann ein Spinnvlies umfassen, das nach dem der Fachwelt bekannten Spinnvliesverfahren hergestellt wird. Für das Spinnvliesverfahren geeignete Polymere sind z.B. Polyethylentherephtalat, Polybutylentherephtalat, Polycarbonat, Polyamid, Polyphenylensulfid, Polyolefin, TPU (thermoplstische Polyurethane) oder Mischungen davon. Die Schutzlage kann Monokomponentenfasern oder Bikomponentenfasern aufweisen. Bevorzugt umfasst die Schutzlage Monokomponenten-Polyesterfasern und besonders bevorzugt Polyethylentherephtalatfasern. Insbesondere besteht die Spinnvlieslage aus Monokomponenten-Polyethylentherephtalatfasern.

Die Schutzlage kann auch durch ein Kardier-Verfahren oder durch einen Meltblown-Prozess erstellt werden. Für das Verfahren geeignete Polymere sind z.B. Polyethylentherephtalat, Polybutylentherephtalat, Polycarbonat, Polyamid, Polyphenylensulfid und Polyolefin oder Mischungen davon.

Der durchschnittliche Durchmesser (d) der Fasern in der Schutzlage ist 2 $\mu$m<d$\leq$50 $\mu$m und bevorzugt 5 $\mu$m<d$\leq$ 30 $\mu$m und besonders bevorzugt 10 $\mu$m<d$\leq$20 $\mu$m.

Die Schutzlage hat eine Flächenmasse von 8 g/m$^2$ - 25 g/m$^2$, bevorzugt von 10 g/m2 bis 20 g/m2, eine Luftdurchlässigkeit von 5000 - 12000 1/m$^2$s, bevorzugt von 6800-9000 l/m$^2$s. Die Dicke der Schutzlage bei 0,1 bar Auflagedruck beträgt 0,05 bis 0,22 mm, bevorzugt 0,05 bis 0,16 mm.

Das Filtermedium kann auch aus der Vlieslage, der Meltblownlage und der Schutzlage bestehen.

Das Filtermedium der vorliegenden Erfindung ist bereits ohne zusätzliche Behandlung flammgeschützt. Hierbei ergibt sich z.B. nach der Norm DIN 75200 ein Wert von B=0. Das Filtermedium kann aber auch zusätzlich flammgeschützt ausgerüstet werden.

Bei dynamischer Filtration ist die Anströmrichtung durch die Meltblownlage oder Schutzlage.

Bei statischer Filtration ist die Anströmrichtung durch die Vlieslage.

Zur Herstellung des Filtermediums kann die Meltblownlage mit der Vlieslage, bevorzugt der Spinnvlieslage, verbunden werden. Dafür kann jedes dem Fachmann bekannte Verfahren benutzt werden, wie zum Beispiel Vernadelungsverfahren, Wasserstrahlvernadelungsverfahren, thermische Verfahren (d.h. Kalanderverfestigung und Ultraschall-Verfestigung) und chemische Verfahren (d.h. Verfestigung mittels Klebstoffe). Bevorzugt wird die Meltblownlage mit der Spinnvlieslage mittels Punktkalander verbunden. Die vorliegende Erfindung betrifft auch ein Filterelement, das das Filtermedium umfasst. Das Filterelement kann zusätzlich ein anderes Filtermedium umfassen, das sich vom erfindungsgemäßen Filtermedium unterscheidet, d.h. andere Eigenschaften hat.

Ein besonders vorteilhaftes Anwendungsgebiet für das erfindungsgemäße Filtermedium sind Gasturbinen.

**Prüfmethoden**

Flächenmasse nach DIN EN ISO 536.

Dicke nach DIN EN ISO 534 bei 0,1 bar Auflagedruck.

Luftdurchlässigkeit nach DIN EN ISO 9237 bei 200 Pa Druckdifferenz.

Effizienz: Die angegebene Effizienzwerte entsprechen der Minimal-Effizienz in Prozent bei 0,4 $\mu$m Partikeln nach DIN EN 779:2012, in Anlehnung auf Grund Flachprobenmessung.

Druckverlust und Staubspeicherkapazität: Druckverlust über Druckdifferenz-Volumenstrom-Kurven und Staubspeicherkapazität nach DIN71460-1

Temperaturbeständigkeit: Die Filtermedien werden 15 Minuten lang in einem Ofen einer Temperatur von 140 °C oder 160 °C ausgesetzt und dann in einem Klimaraum bei 24 °C und 50% Luftfeuchtigkeit gelagert. Nach 24 Stunden in dem Klimaraum bei 24 °C und 50% Luftfeuchtigkeit werden die Filtermedien nach hier beschriebenen Prüfmethoden erneut gemessen.

Die Porosität berechnet sich aus der tatsächlichen Dichte des Filtermediums und der durchschnittlichen Dichte der eingesetzten Fasern nach folgender Formel:

```
Porosität = (1 – Dichte Filtermedium [g/cm³]/ Dichte Fa-
sern [g/cm³])*100%
```

Faserdurchmesser

i. Messprinzip

Mittels Rasterelektronenmikroskop werden Bilder in definierter Vergrößerung aufge-nommen. Diese werden mittels automatischer Software vermessen. Messstellen, die Kreuzungspunkte von Fasern erfassen und somit nicht den Faserdurchmesser darstellen, werden manuell entfernt. Faserbündel werden generell als eine Faser gewertet.

ii. Geräte

Rasterelektronenmikroskop Phenom Fei mit dazugehöriger Software Fibermetric V2.1

iii. Durchführung der Prüfung

Probenahme: Vliesstoff an 5 Stellen über Bahnbreite (bei 1,8m)

Aufnahmen:

a. Probe besputtern

b. Zufällige Aufnahme anhand von optischem Bild, die so gefundene Stelle wird mit 1000-facher Vergrößerung mittels REM aufgenommen.

c. Faserdurchmesserbestimmung über "one click" Methode, es muss jede Faser einmal erfasst werden;

d. Durchschnittswert und Faserdurchmesserverteilung wird durch die von Fibermetric erhaltenen Daten mittels Excel ausgewertet.

Somit wird pro Vlies der mittlere Faserdurchmesser an mind. fünf Stellen erfasst. Die fünf Mittelwerte werden zu einem Mittelwert zusammengefasst. Dieser Wert wird als mittlerer Faserdurchmesser des Vlieses bezeichnet.
Es werden mindestens 500 Fasern ausgewertet.
Ebenso wird der prozentuale Anteil von Fasern mit einem Durchmesser $\leq 0,95$ $\mu$m erfasst.

e. Fehler/Standardabweichung

Es wird die Standardabweichung mit aufgeführt.

**Beispiel 1**

Ein 19 g/m$^2$ PBT Meltblown mit einer Dicke von 0,12 mm und einer Luftdurchlässigkeit von 280 l/m$^2$s wurde mit einem 80 g/m$^2$ PET/coPET Spinnvlies mit Dicke 0,35 mm mittels Punktkalander verbunden. Danach wurde ein 15 g/m2 PET Spinnvlies mit Dicke 0,11 mm und einer Luftdurchlässigkeit von 7500 l/m$^2$s auf die Meltblownlage aufgebracht. Dabei wurde die Schutzlage auf die Oberseite der Meltblownlage geklebt.
Das so erhaltene erfindungsgemäße Filtermaterial hat eine Dicke von 0,60 mm, eine Luftdurchlässigkeit von 160 l/m$^2$s, eine Flächenmasse von 114 g/m2 und eine Porosität von 88,3%.

**Vergleichsbeispiel 1**

Ein 19 g/m$^2$ PP Meltblown mit einer Dicke von 0,12 mm und einer Luftdurchlässigkeit von 280 l/m$^2$s wurde mit einem 80 g/m$^2$ PET/coPET Spinnvlies mit einer Dicke von 0,35 mm mittels Punktkalander verbunden. Danach wurde ein 15 g/m2 PET Spinnvlies mit einer Dicke von 0,11 mm und einer Luftdurchlässigkeit von 7500 l/m$^2$s auf die Meltblownlage aufgebracht. Dabei wurde die Schutzlage auf die Oberseite der Meltblownlage geklebt.
Das so erhaltene Filtermaterial weist eine Dicke von 0,60 mm, eine Luftdurchlässigkeit von 160 l/m$^2$s, eine Flächenmasse von 114 g/m2 und eine Porosität von 87,6% auf.
Das Filtermedium von Beispiel 1 lässt sich sehr gut plissieren und ermöglicht eine hohe Anzahl von Falten. Gleichzeitig zeigt dieses Filtermedium eine sehr hohe Standzeit, Effizienz und eine ausgezeichnete Versprödungsbeständigkeit. Tatsächlich zeigt das Filtermedium keine wesentlichen physikalischen Veränderungen sowie keinen Effizienzabfall nach einer Temperaturbehandlung bei 160 ° C.
Der Druckverlust des Filtermediums erhöht sich nicht nach der Temperaturbehandlung bei 160 °C und die Effizienz nach der Norm EN779:2012 bleibt konstant bei 35% (F7 Klasse), 50% (F8 Klasse) oder 70% (F9 Klasse).
Im Gegensatz dazu zeigt das Vergleichsbeispiel 1 eine Erhöhung des Druckverlusts schon nach einer Temperaturbehandlung bei 140 °C. Die Staubspeicherkapazität verringert sich deutlich (~75%).

**Patentansprüche**

1. Filtermedium umfassend eine Vlieslage, die Bikomponentenfasern aufweist, und eine Meltblownlage, die Polyesterfasern mit einem mittleren Durchmesser (d1) von kleiner als 1,8 $\mu$m umfasst, wobei die Dicke der Vlieslage kleiner als 0,4 mm bei 0,1 bar Auflagedruck ist, und mindestens 25% der Polyesterfasern der Meltblownlage einen Durchmesser (d) von kleiner als 1 $\mu$m haben.

2. Filtermedium nach Anspruch 1, **dadurch gekennzeichnet, dass** das Filtermedium eine Flächenmasse nach DIN EN ISO 536 von 69 - 180 g/m2, eine Luftdurchlässigkeit nach DIN EN ISO 9237 bei 200 Pa Druckdifferenz von 40-400 l/m$^2$s, eine Dicke von 0,32-0,82 mm und eine Porosität von 70-90% hat.

3. Filtermedium nach Anspruch 1, **dadurch gekennzeichnet, dass** die Vlieslage eine Spinnvlieslage ist.

4. Filtermedium nach einem der vorhergehenden Ansprüche, **dadurch gekennzeichnet, dass** die Vlieslage eine Flächenmasse nach DIN EN ISO 536 von 60 - 120 g/m2, eine Luftdurchlässigkeit nach DIN EN ISO 9237 bei 200 Pa Druckdifferenz von 1000 - 3500 l/m$^2$s und eine Dicke von 0,25 - 0,38 mm hat.

5. Filtermedium nach einem der vorhergehenden Ansprüche, **dadurch gekennzeichnet, dass** die Bikomponentenfasern mindestens eine Komponente, die aus der Gruppe bestehend aus Polyester, Polyolefin und Polyamide ausgewählt ist, umfassen.

6. Filtermedium nach einem der vorhergehenden Ansprüche, **dadurch gekennzeichnet, dass** die Bikomponentenfasern PET/CoPET enthalten.

7. Filtermedium nach einem der vorhergehenden Ansprüche, **dadurch gekennzeichnet, dass** die Meltblownlage Monokomponentenfasern umfasst.

8. Filtermedium nach einem der vorhergehenden Ansprüche, **dadurch gekennzeichnet, dass** die Meltblownlage PBT-Fasern umfasst oder aus PBT-Fasern besteht.

9. Filtermedium nach einem der vorhergehenden Ansprüche, **dadurch gekennzeichnet, dass** die Meltblownlage eine Flächenmasse nach DIN EN ISO 536 von 9 - 35 g/m2, eine Luftdurchlässigkeit nach DIN EN ISO 9237 bei 200 Pa Druckdifferenz von 100 - 800 l/m$^2$s und eine Dicke von 0,07 - 0,22 mm hat.

10. Filtermedium nach einem der vorhergehenden Ansprüche, **dadurch gekennzeichnet, dass** die Meltblownlage Polyesterfasern mit einem mittleren Durchmesser (d1) von 0,60 $\mu$m $\leq$ d $\leq$ 1,75 $\mu$m umfasst.

11. Filtermedium nach einem der vorhergehenden Ansprüche, **dadurch gekennzeichnet, dass** das Filtermedium zusätzlich eine Schutzlage aufweist, die eine Spinnvlieslage oder eine Meltblownlage umfasst.

12. Filtermedium nach Anspruch 11, **dadurch gekennzeichnet, dass** die Schutzlage Polyesterfasern umfasst.

13. Filtermedium nach Anspruch 11 oder 12, **dadurch gekennzeichnet, dass** die Schutzlage Monokomponentenfasern umfasst.

14. Filtermedium nach einem der Ansprüche 11 bis 13, **dadurch gekennzeichnet, dass** die Schutzlage PBT- oder PET-Fasern umfasst.

15. Filterelement umfassend ein Filtermedium nach einem der vorhergehenden Ansprüche.

16. Filterelement nach Anspruch 15, das ferner ein Filtermedium umfasst, welches sich von dem Filtermedium nach einem oder mehreren der Ansprüche 1 bis 14 unterscheidet.

**Claims**

1. Filter medium comprising a nonwoven layer, which has bicomponent fibres, and a melt-blown layer, which comprises polyester fibres having an average diameter (d1) of less than 1.8 $\mu$m, wherein the thickness of the nonwoven layer is less than 0.4 mm at a contact pressure of 0.1 bar, and at least 25% of the polyester fibres of the melt-blown layer have a diameter (d) of less than 1 $\mu$m.

2. Filter medium according to claim 1, **characterised in that** the filter medium has a basis weight of 69-180 g/m², an air permeability of 40-400 l/m²s, a thickness of 0.32-0.82 mm and a porosity of 70-90%.

3. Filter medium according to claim 1, **characterised in that** the nonwoven layer is a spunbonded nonwoven layer.

4. Filter medium according to any of the preceding claims, **characterised in that** the nonwoven layer has a basis weight of 60-120 g/m², an air permeability of 1,000-3,500 l/m²s, and a thickness of 0.25-0.38 mm.

5. Filter medium according to any of the preceding claims, **characterised in that** the bicomponent fibres comprise at least one component selected from the group consisting of polyester, polyolefin, and polyamide.

6. Filter medium according to any of the preceding claims, **characterised in that** the bicomponent fibres contain PET/CoPET.

7. Filter medium according to any of the preceding claims, **characterised in that** the melt-blown layer comprises monocomponent fibres.

8. Filter medium according to any of the preceding claims, **characterised in that** the melt-blown layer comprises PBT fibres or consists of PBT fibres.

9. Filter medium according to any of the preceding claims, **characterised in that** the melt-blown layer has a basis weight of 9-35 g/m², an air permeability of 100-800 l/m²s, and a thickness of 0.07-0.22 mm.

10. Filter medium according to any of the preceding claims, **characterised in that** the melt-blown layer comprises polyester fibres having an average diameter (d1) of 0.60 $\mu$m $\leq$ **d** $\leq$ **1.75** $\mu$m**.

11. Filter medium according to any of the preceding claims, **characterised in that** the filter medium additionally has a protective layer, which comprises a spunbonded nonwoven layer or a melt-blown layer.

12. Filter medium according to claim 11, **characterised in that** the protective layer comprises polyester fibres.

13. Filter medium according to either claim 11 or claim 12, **characterised in that** the protective layer comprises monocomponent fibres.

14. Filter medium according to any of claims 11 to 13, **characterised in that** the protective layer comprises PBT fibres or PET fibres.

15. Filter element comprising a filter medium according to any of the preceding claims.

16. Filter element according to claim 15, which further comprises a filter medium which differs from the filter medium according to any of claims 1 to 14.

**Revendications**

1. Milieu filtrant comprenant une couche de non-tissé qui présente des fibres à deux composants et une couche soufflée en fusion, qui comprend des fibres de polyester avec un diamètre moyen (d1) inférieur à 1,8 $\mu$m, où l'épaisseur de la couche de non-tissé est inférieure à 0,4 mm pour une pression appliquée de 0,1 bar, et au moins 25 % des fibres de polyester de la couche soufflée en fusion ont un diamètre (d) inférieur à 1 $\mu$m.

2. Milieu filtrant selon la revendication 1, **caractérisé en ce que** le milieu filtrant a une masse surfacique selon la norme DIN EN ISO 536 de 69 à 180 g/m2, une perméabilité à l'air selon la norme DIN EN ISO 9237, pour une différence de pression de 200 Pa, de 40 à 400 l/m²s, une épaisseur de 0,32 à 0,82 mm et une porosité de 70 à 90 %.

3. Milieu filtrant selon la revendication 1, **caractérisé en ce que** la couche de non-tissé est une couche de non-tissé de filage.

4. Milieu filtrant selon l'une des revendications précédentes, **caractérisé en ce que** la couche de non-tissé a une masse surfacique selon la norme DIN EN ISO 536 de 60 à 120 g/m2, une perméabilité à l'air selon la norme DIN EN ISO 9237, pour une différence de pression de 200 Pa, de 1000 à 3500 l/m²s, une épaisseur de 0,25 à 0,38 mm.

5. Milieu filtrant selon l'une des revendications précédentes, **caractérisé en ce que** les fibres à deux composants comprennent au moins un composant qui est choisi dans le groupe constitué des polyesters, des polyoléfines et des polyamides.

6. Milieu filtrant selon l'une des revendications précédentes, **caractérisé en ce que** les fibres à deux composants contiennent du PET/co PET.

7. Milieu filtrant selon l'une des revendications précédentes, **caractérisé en ce que** la couche de non-tissé soufflée en fusion comprend des fibres à un composant.

8. Milieu filtrant selon l'une des revendications précédentes, **caractérisé en ce que** la couche de non-tissé soufflée en fusion comprend des fibres de PBT ou est constituée de fibres de PBT.

9. Milieu filtrant selon l'une des revendications précédentes, **caractérisé en ce que** la couche de non-tissé soufflée en fusion a une masse surfacique selon la norme DIN EN ISO 536 de 9 à 35 g/m2, une perméabilité à l'air selon la norme DIN EN ISO 9237, pour une différence de pression de 200 Pa, de 100 à 800 l/m²s, et une épaisseur de 0,07 à 0,22 mm.

10. Milieu filtrant selon l'une des revendications précédentes, **caractérisé en ce que** la couche de non-tissé soufflée en fusion comprend des fibres de polyester avec un diamètre moyen (d1) de $0,60 \ \mu m \leq d \leq 1,75 \ \mu m$.

11. Milieu filtrant selon l'une des revendications précédentes, **caractérisé en ce que** le milieu filtrant présente en outre une couche de protection qui comprend une couche de non-tissé de filage ou une couche de non-tissé soufflée en fusion.

12. Milieu filtrant selon la revendication 11, **caractérisé en ce que** la couche de protection comprend des fibres de polyester.

13. Milieu filtrant selon la revendication 11 ou la revendication 12, **caractérisé en ce que** la couche de protection comprend des fibres à un composant.

14. Milieu filtrant selon l'une des revendications 11 à 13, **caractérisé en ce que** la couche de protection comprend des fibres de PBT ou des fibres de PET.

15. Elément de filtre comprenant un milieu filtrant selon l'une des revendications précédentes.

16. Elément de filtre selon la revendication 15, qui comprend en outre un milieu filtrant, lequel est différent du milieu filtrant selon l'une ou plusieurs des revendications 1 à 14.

**IN DER BESCHREIBUNG AUFGEFÜHRTE DOKUMENTE**

**In der Beschreibung aufgeführte Patentdokumente**

- WO 2010049052 A1

- WO 2008078858 A1